# EUROPÄISCHE PATENTSCHRIFT

(11) **EP 1 284 891 B1**
(45) Veröffentlichungstag und Bekanntmachung des Hinweises auf die Patenterteilung: **16.06.2004**
(21) Anmeldenummer: 01942987.7
(22) Anmeldetag: 26.04.2001
(51) Int. Cl.: B60R 21/01

(54) **VORRICHTUNG UND VERFAHREN ZUR ENERGIEVERSORGUNG EINES ZÜNDMITTELS EINES INSASSENRÜCKHALTEMITTELS**
DEVICE AND METHOD FOR SUPPLYING THE TRIGGERING DEVICE OF AN OCCUPANT RESTRAINT SYSTEM WITH POWER
DISPOSITIF ET PROCEDE POUR ALIMENTER EN ENERGIE UNE AMORCE D'UN MOYEN DE RETENUE DES OCCUPANTS D'UN VEHICULE

(30) Priorität: 31.05.2000 DE 10027182
(43) Veröffentlichungstag der Anmeldung: 26.02.2003
(73) Patentinhaber: SIEMENS AKTIENGESELLSCHAFT, 80333 München (DE)
(72) Erfinder: GRASSHOFF, Helge, 93049 Regensburg (DE)
(86) Internationale Anmeldenummer: PCT/DE2001/001619
(87) Internationale Veröffentlichungsnummer: WO 2001/092065

(56) Entgegenhaltungen:
- DE-A- 4 432 444
- DE-A- 19 717 155
- US-A- 5 805 058
- US-A- 5 861 681

## Beschreibung

Die Erfindung betrifft eine Vorrichtung und ein Verfahren zur Energieversorgung eines Zündmittels eines Insassenrückhaltemittels, beispielsweise gemäß Dokument US 5 805 058.

Wesentlicher Bestandteil eines Steuergerätes für Insassenrückhaltemittel wie beispielsweise Airbag-Steuergeräte sind die sogenannten elektrischen Zündkreise. Derartige Zündkreise enthalten als wesentlichen Bestandteil mindestens eine Zündpille, die beim Zünden durch Zufuhr von elektrischer Energie den Airbag-Treibsatz zur Explosion bringt. Weitere Bestandteile sind mindestens zwei elektronische Schalter, die häufig als Teil eines kundenspezifischen Schaltkreises beispielsweise in Form eines MOS-Feldeffekt-Transistors realisiert sind. Die im Normalfall geöffneten Schalter werden im Falle der Zündung des zugehörigen Airbags mittels eines Steuersignals, das durch eine Treiberschaltung zum Steuern der Schalter (MOS-Feldeffekt-Transistors) entsprechend angepasst wird, geschlossen. Die elektronischen Schalter besitzen im durchgeschalteten Zustand einen elektrischen Übergangswiderstand, der unter anderem eine Funktion der Gate-Spannung des jeweils verwendeten MOS-Feldeffekt-Transistors ist. Zum Zwecke geringer Energieverluste ist es günstig, den Übergangswiderstand während des Zündens minimal zu halten. Dazu muss die Gate-Spannung des MOS-Feldeffekt-Transistors jedoch möglichst hoch sein. Dieser Umstand erfordert es seinerseits, die Versorgungsspannung der Treiberschaltung für die elektrischen Schalter möglichst lange hoch zu halten, wobei die Versorgungsspannung dann mehrere Volt über der Zündspannung liegt.

In dem Airbag-Steuergerät ist deshalb meistens ein Schaltregler vorgesehen, der die Batteriespannung des Fahrzeuges auf das Niveau der Zündspannung hochsetzt. Zum Hochsetzen der Spannung wird üblicherweise ein Hochsetzsteller verwendet, welcher einen Kondensator (bevorzugt Elektrolyt-Kondensator) zum Glätten der Schaltspannung und zum Zwischenspeichern der für den Betrieb einer Steuereinrichtung (ECU) erforderlichen Energie aufweist. Die in dem (als Energiespeicher wirkenden) Kondensator gespeicherte Energiereserve wird über eine Diode einer Ladungspumpe zugeführt, deren Ausgangsspannung um mehrere Volt höher als die Zündspannung ist. Die durch die Ladungspumpe hochgesetzte Spannung dient dann zur Versorgung der Treiberschaltung für die Schalter.

Problematisch dabei ist jedoch, dass beim Zündvorgang Energie aus dem Energiespeicher (Kondensator) entnommen wird und dadurch die Spannung über dem Energiespeicher absinkt. Dies kann dazu führen, dass nicht mehr ausreichend Spannung zur Verfügung steht, um ein vollkommenes Durchschalten der MOS-Feldeffekt-Transistoren zu gewährleisten. Als Folge dessen kann wiederum der Zündvorgang unter Umständen nur unvollkommen ausgeführt werden, was seinerseits zu Störungen der Airbag-Funktion insgesamt führen kann.

Aufgabe der Erfindung ist es, das Durchschalten zur Energieversorgung eines Insassenrückhaltemittels zu verbessern.

Die genannte Aufgabe wird mit den Merkmalen der Ansprüche 1 und 9 gelöst.

Die Erfindung geht davon aus, dass neben dem Energiespeicher im Hochsetzsteller zusätzlich mindestens noch ein weiterer Energiespeicher in einem Steuergerät für ein Insassenrückhaltemittel bereitsteht. Während des Zündens der Zündmittel (Zündpillen) werden die verschiedenen Energiespeicher unterschiedlich stark beansprucht, so dass die Spannungen an den einzelnen Energiespeichern unterschiedlich schnell absinken. Erfindungsgemäß wird die Treiberschaltung aus zumindest zwei derartigen Energiespeichern über eine Auswahlschaltung derart versorgt, dass die Versorgung der Treiberschaltung immer aus dem Energiespeicher mit der relativ zu den restlichen Energiespeichern höchsten Spannung erfolgt. Mit dieser Maßnahme wird sichergestellt, dass immer die höchste Spannung zur Versorgung der Treiberschaltung verwendet wird, so dass die Treiberschaltung mit den zur Verfügung stehenden Mitteln optimal versorgt wird. Ein weiterer Vorteil besteht darin, dass dann, wenn ein Energiespeicher bereits durch den Zündvorgang belastet wird und damit seine Spannung sinkt, dieser Speicher nicht noch zusätzlich mit der Versorgung der Treiberschaltung belastet wird.

Als Auswahlschaltung kann beispielsweise eine Schalteinrichtung vorgesehen werden, die den Energiespeicher mit der jeweils höchsten Spannung auf die Treiberschaltung aufschaltet. Bevorzugt wird aber eine Dioden-Matrix verwendet, da diese zum einen nur einen geringen schaltungstechnischen Aufwand erfordert und zum anderen eine hohe Funktionssicherheit bietet.

Als geeignete Energiespeicher kommen beispielsweise die Energiespeicher in den Zündkreisen von Front-Airbags des Insassenrückhaltemittels und/oder in den Zündkreisen von Seiten-Airbags des Insassenrückhaltemittels und/oder in einem Hochsetzsteller zur Erzeugung einer Zündspannung für das Insassenrückhaltemittel und/oder in einem Hochsetzsteller zur Erzeugung einer Versorgungsspannung für die Steuereinrichtung, wobei bevorzugt ein einziger Hochsteller für sowohl die Erzeugung der Zündspannung als auch für die Erzeugung der Versorgungsspannung eingesetzt wird. Dadurch werden im System bereits vorhandene Energiespeicher genutzt, so dass der Wirkungsgrad des Gesamtsystems erhöht und dabei der schaltungstechnische Aufwand gering gehalten werden kann.

Um im Falle der Verwendung von MOS-Feldeffekt-Transistoren als Schalter und dabei insbesondere als High-Side-Schalter eine ausreichende hohe Ansteuerspannung erzeugen zu können, wird bei einer Weiterbildung der Erfindung die Treiberschaltung über eine Ladungspumpe aus den Energiespeichern versorgt. Dazu ist zwischen die Auswahlschaltung und den Versorgungsleitungen der Treiberschaltung eine Ladungspumpe geschaltet.

Dabei kann die Ladungspumpe einen weiteren Energiespeicher zur Energiezwischenspeicherung und damit Erhöhung der Versorgungssicherheit aufweisen.

Schließlich werden als Energiespeicher bevorzugt Kondensatoren und insbesondere aufgrund ihrer hohen Kapazitäten Elektrolyt-Kondensatoren oder Gold-Kondensatoren verwendet. Kondensatoren haben dabei im Vergleich zu anderen Energiespeichern ein relativ günstiges Preis-Kapazitäts-Verhältnis. Es können jedoch auch bestimmte Arten von Akkumulatoren wie beispielsweise Polymerfolien-Akkumulatoren Anwendung finden.

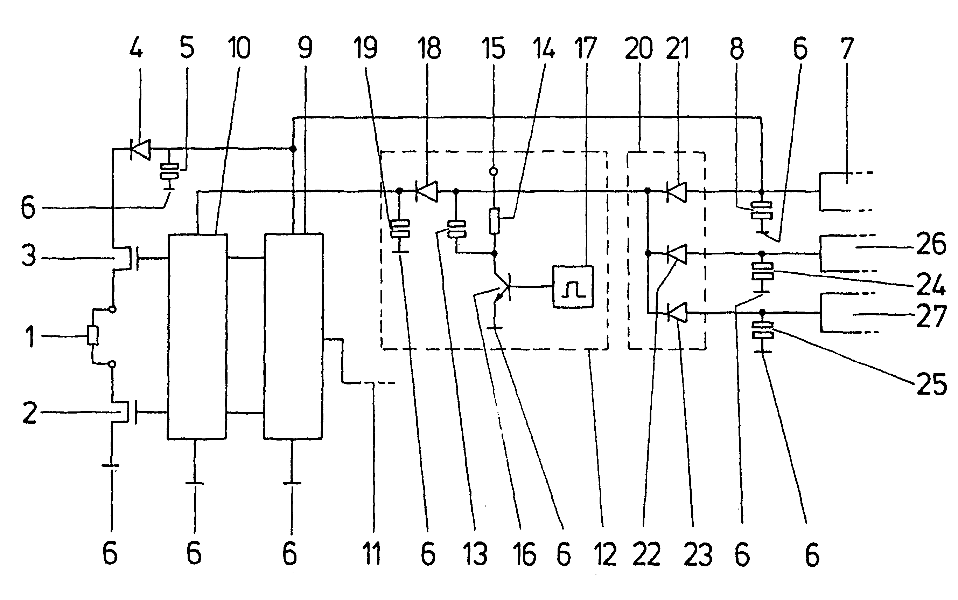

Die Erfindung wird nachfolgend anhand des in der einzigen Figur der Zeichnung dargestellten Ausführungsbeispiels näher erläutert.

Bei der als Ausführungsbeispiel gezeigten Zündeinrichtung wird ein nicht dargestellter Airbag mittels einer Zündpille 1 im Bedarfsfalle gezündet. Die Zündpille wird dabei mittels zweier als gesteuerte Schalter dienenden MOS-Feldeffekt-Transistoren 2 und 3 auf eine Zündspannung aufgeschaltet, die über eine Diode 4 an einem Zündkondensator 5 abgreifbar ist. Die Zündpille 1 ist dazu zum einen über die Drain-Source-Strecke des MOS-Feldeffekt-Transistors 2 an einen mit einem Bezugspotential 6 verbundenen Anschluss des Zündkondensators 5 und zum anderen unter Zwischenschaltung der Drain-Source-Strecke des MOS-Feldeffekt-Transistors 3 sowie der Diode 4 an den anderen Anschluss des Zündkondensators 5 angeschlossen. Die Speisung des Zündkondensators 5 erfolgt durch einen Hochsetzsteller 7, welcher einen Speicherkondensator 8 mit einschließt. Am Speicherkondensator 8 ist die Zündspannung 8 abgreifbar, die beim vorliegenden Ausführungsbeispiel sowohl für das Zünden der Zündpille (in Verbindung mit Zündkondensator 5) als auch zum Betrieb einer Steuereinrichtung 9 vorgesehen ist. Die Steuereinrichtung 9 steuert eine Treiberschaltung 10 in Abhängigkeit von einem Signal 11 eines in der Zeichnung nicht dargestellten Crash-Sensors. Die Treiberschaltung 10 ist schließlich mit den Gate-Anschlüssen der MOS-Feldeffekt-Transistoren 2 und 3 gekoppelt, um diese entsprechend der Ansteuerung durch die Steuereinrichtung 9 im Bedarfsfalle durchzuschalten.

Beim Ausführungsbeispiel sind die beiden MOS-Feldeffekt-Transistoren 2 und 3 identisch aufgebaut, so dass der MOS-Feldeffekt-Transistor 3 dementsprechend einen High-Side-Schalter bildet. Um diesen Transistor ausreichend durchzuschalten, ist eine Spannung notwendig, die größer ist als die an dem Zündkondensator 5 und der Steuereinrichtung 9 anliegende Zündspannung. Aus diesem Grund wird die Treiberschaltung 10 durch eine Ladungspumpe 12 versorgt. Die Ladungspumpe 12 erhöht eine an ihrem Eingang anliegende Spannung um einen bestimmten Betrag. Beim Ausführungsbeispiel wird dabei die Eingangsspannung annähernd verdoppelt.

Im einzelnen umfasst die vorliegende Ladungspumpe 12 einen Kondensator 13, der einerseits an den Eingang der Ladungspumpe 12 angeschlossen und andererseits mit einem Knotenpunkt verbunden ist. Der Knotenpunkt ist dabei zum einen über einen Widerstand 14 mit einer Hilfsspannung 15 und zum anderen über die Kollektor-Emitter-Strecke eines Bipolar-Transistors 16 mit dem Bezugspotential 6 gekoppelt. Die Ansteuerung des Bipolar-Transistors 16 erfolgt mittels eines Rechteck-Generators 17, so dass der Bipolar-Transistor 16 fortlaufend einund ausgeschaltet wird. Der Eingang der Ladungpumpe 12 ist über eine Diode 18 in Durchlassrichtung mit seinem Ausgang gekoppelt, wobei der Ausgang über einen Speicherkondensator 19 mit dem Bezugspotential 6 verschaltet ist. Die Spannung am Eingang der Ladungspumpe 12 wird durch eine Auswahlschaltung 20 bereitgestellt. Die Auswahlschaltung 20 enthält eine Dioden-Matrix mit drei einzelnen Dioden 21, 22 und 23, die in Durchlassrichtung geschaltet sind und dabei eingangsseitig jeweils mit einem Energiespeicher verbunden und ausgangsseitig miteinander verschaltet sind.

Als Energiespeicher sind neben dem Speicherkondensator 8 des Hochsetzstellers 7 zudem die Speicherkondensatoren 24 und 25 einer Front-Airbag-Steuerung 26 bzw. einer Seiten-Airbag-Steuerung 27 vorgesehen.

Damit besitzt das Airbag-Steuergerät (ECU) beim vorliegenden Ausführungsbeispiel insgesamt mindestens drei Energiereserven, nämlich die Reserve des Hochsetzstellers 7, die Energiereserve der Frontzündkreise (Front-Airbag-Steuerung 26) und die Energiereserve für die Seitenzündkreise (Seiten-Airbag-Steuerung 27) sowie gegebenenfalls die Reserve der Ladungspumpe. Für den Fall, dass die Spannung des Hochsetzstellers 7 während eines Aufpralls aufgrund eines Abrisses der Autobatterie zusammenbricht und gleichzeitig die Front-Airbags gezündet werden, so können die Treiberschaltungen der Zündkreisschalter aus der nicht belasteten Seiten-Energiereserve gespeist werden, die ihre Spannung nahezu auf Anfangszündspannung halten kann.

## Patentansprüche

1. Vorrichtung zur Energieversorgung eines Zündmittels (1) eines Insassenrückhaltemittels, mit
- Schaltern (2, 3) für die Zündmittel (1),
- mehreren Energiespeichern (8, 24, 25),
- einer Steuereinrichtung (9) und einer Treiberschaltung (10) für die Schalter aufweisenden Insassenrückhaltemittel,
wobei die Treiberschaltung (10) aus zumindest zwei der Energiespeicher (8, 24, 25) über eine Auswahlschaltung (20) derart versorgt wird, dass die Versorgung der Treiberschaltung (10) immer aus dem Energiespeicher (8, 24, 25) mit der relativ zu den restlichen Energiespeichern (8, 24, 25) höchsten Spannung erfolgt, **dadurch gekennzeichnet, dass** zwischen Auswahlschaltung (20) und Treiberschaltung (10) eine Ladungspumpe (12) geschaltet ist.

2. Vorrichtung nach Anspruch 1, bei der als Auswahlschaltung eine Diodenmatrix (21, 22, 23) vorgesehen ist.

3. Vorrichtung nach Anspruch 1 oder 2, bei der einer (8) der Energiespeicher (8, 24, 25) in den Zündkreisen (7) von Frontairbags des Insassenrückhaltemittels angeordnet ist.

4. Vorrichtung nach einem der vorherigen Ansprüche, bei der einer (24) der Energiespeicher (8, 24, 25) in den Zündkreisen von Seitenairbags des Insassenrückhaltemittels angeordnet ist.

5. Vorrichtung nach einem der vorherigen Ansprüche, bei der einer (25) der Energiespeicher (8, 24, 25) in einem Hochsetzsteller (26) zur Erzeugung einer Zündspannung für das Insassenrückhaltemittel angeordnet ist.

6. Vorrichtung nach einem der vorherigen Ansprüche, bei der einer (8) der Energiespeicher (8, 24, 25) in einem Hochsetzsteller (27) zur Erzeugung einer Versorgungsspannung für die Steuereinrichtung (9) angeordnet ist.

7. Vorrichtung nach Anspruch 6, bei der die Ladungspumpe (12) einen weiteren Energiespeicher (19) aufweist.

8. Vorrichtung nach einem der vorherigen Ansprüche, bei der als Energiespeicher (8, 24, 25, 19) Kondensatoren vorgesehen sind.

9. Verfahren zur Energieversorgung eines Zündmittels eines Insassenrückhaltemittels, bei dem
- Energie aus einem ersten Energiespeicher (5, 8). durch Schalter (2, 3) dem Zündmittel Zugeführt wird,
- Steuerenergie aus mindestens zwei Energiespeichern (8, 24, 25) über eine Auswahlschaltung (20) der Treiberschaltung zur Ansteuerung der Schalter (2, 3) Zugeführt wird und die Auswahlschaltung (20) den Energiespeicher mit dem höchsten Spannungspotential an die Treiberschaltung durchschaltet, **dadurch gekennzeichnet, dass** zwischen Auswahlschaltung (20) und Treiberschaltung (10) eine Ladungspumpe (12) geschaltet ist, die das Spannungspotential für die Treiberschaltung (10) erhöht.

## Claims

1. Device for supplying power to a firing means (1) of a vehicle-occupant restraint system, having
- switches (2, 3) for the firing means (1),
- a plurality of energy stores (8, 24, 25),
- a control device (9) and a driver circuit (10) for vehicle-occupant restraint systems having the switches,
the driver circuit (10) being supplied from at least two of the energy stores (8, 24, 25) via a selector circuit (20) in such a way that the energy store (8, 24, 25) always supplies the driver circuit (10) with the voltage which is the highest in relation to the remaining energy stores (8, 24, 25) **characterized in that** a charge pump (12) is connected between the selector circuit (20) and the driver circuit (10).

2. Device according to Claim 1, in which a diode matrix (21, 22, 23) is provided as the selector switch.

3. Device according to Claim 1 or 2, in which one (8) of the energy stores (8, 24, 25) is arranged in the firing circuits (7) of front airbags of the vehicle-occupant restraint system.

4. Device according to one of the preceding claims, in which one (24) of the energy stores (8, 24, 25) is arranged in the firing circuits of side airbags of the vehicle-occupant restraint system.

5. Device according to one of the preceding claims, in which one (25) of the energy stores (8, 24, 25) is arranged in a step-up converter (26) for generating a firing voltage for the vehicle-occupant restraint means.

6. Device according to one of the preceding claims, in which one (8) of the energy stores (8, 24, 25) is arranged in a step-up converter (27) for generating a supply voltage for the control device (9).

7. Device according to Claim 6, in which the charge pump (12) has a further energy store (19).

8. Device according to one of the preceding claims, in which capacitors are provided as the energy stores (8, 24, 25, 19).

9. Method for supplying power to a firing means of a vehicle-occupant restraint system, in which
- energy is fed to the firing means from a first energy store (5, 8) by means of switches (2, 3),
- control energy is fed from at least two energy stores (8, 24, 25) via a selector circuit (20) to the driver circuit in order to actuate the switches (2, 3), the selector circuit (20) connecting through the energy store with the highest voltage potential to the driver circuit, **characterized in that** a charge pump (12) is connected between the selector circuit (20) and the driver circuit (10), which charge pump (12) increases the voltage potential for the driver circuit (10).

## Revendications

1. Dispositif d'alimentation en énergie d'un moyen d'allumage (1) d'un moyen de retenue d'occupant avec :
- des commutateurs (2, 3) pour le moyen d'allumage (1),
- plusieurs réservoirs d'énergie (8, 24, 25),
- un dispositif de commande (9) et un circuit de pilotage (10) pour les commutateurs compris dans le moyen de retenue d'occupant,
le circuit de pilotage (10) est alimenté à partir d'au moins deux des réservoirs d'énergie (8, 24, 25) par l'intermédiaire d'un circuit de sélection (20) de telle façon que l'alimentation du circuit de pilotage (10) a toujours lieu à partir du réservoir d'énergie (8, 24, 25) avec la plus haute tension relativement aux autres réservoirs d'énergie (8, 24, 25), **caractérisé en ce qu'**une pompe de charge (12) est connectée entre le circuit de sélection (20) et le circuit de pilotage (10).

2. Dispositif selon la revendication 1, dans lequel une matrice à diode (21, 22, 23) est prévue comme circuit de sélection.

3. Dispositif selon l'une quelconque des revendications précédentes, dans lequel un (8) des réservoirs d'énergie (8, 24, 25) est disposé dans les circuits d'allumage (7) des airbags frontaux du moyen de retenue d'occupant.

4. Dispositif selon l'une quelconque des revendications précédentes, dans lequel un (24) des réservoirs d'énergie (8, 24, 25) est disposé dans les circuits d'allumage des airbags latéraux du moyen de retenue d'occupant.

5. Dispositif selon l'une quelconque des revendications précédentes, dans lequel un (25) des réservoirs d'énergie (8, 24, 25) est disposé dans un convertisseur élévateur (26) pour la production d'une tension d'allumage pour le moyen de retenue d'occupant.

6. Dispositif selon l'une quelconque des revendications précédentes, dans lequel un (8) des réservoirs d'énergie (8, 24, 25) est disposé dans un convertisseur élévateur (27) pour la production d'une tension d'alimentation pour le dispositif de commande (9).

7. Dispositif selon la revendication 6, dans lequel la pompe de charge (12) comprend un réservoir d'énergie (19) supplémentaire.

8. Dispositif selon l'une quelconque des revendications précédentes, dans lequel des condensateurs sont prévus comme réservoirs d'énergie (8, 24, 25, 19).

9. Procédé pour l'alimentation en énergie d'un moyen d'allumage d'un moyen de retenue d'occupant, dans lequel :
- l'énergie est envoyée au moyen d'allumage à partir d'un premier réservoir d'énergie (5, 8) par des commutateurs (2, 3),
- une énergie de commande est envoyée au circuit de pilotage pour la commande des commutateurs (2, 3) à partir d'au moins deux réservoirs d'énergie (8, 24, 25) par l'intermédiaire d'un circuit de sélection (20) et le circuit de sélection (20) connecte le réservoir d'énergie avec circuit de pilotage avec le plus haut potentiel de tension, **caractérisé en ce qu'**entre le circuit de sélection (20) et le circuit de pilotage (10) une pompe de charge (12) est connectée qui augmente le potentiel de tension pour le circuit de pilotage (10).
